# EUROPEAN PATENT APPLICATION

(11) **EP 2 309 434 A1**
(43) Date of publication of application: **13.04.2011**
(21) Application number: 10186564.0
(22) Date of filing: 05.10.2010
(51) Int. Cl.: G06Q 10/00, G06Q 30/00

(54) **Mobile social networking enabled by bar codes**

(30) Priority: 06.10.2009 US 249190 P; 06.05.2010 US 774969
(71) Applicant: Samsung Electronics Co., Ltd., Suwon-si, Gyeonggi-do 442-742 (KR)
(72) Inventor: Khan, Farooq U, Gyeonggi-do 442-742 (KR); Bhat, Kong Posh, Gyeonggi-do 442-742 (KR)
(74) Representative: Jenkins, Richard Gavin

(57) **Abstract**

A method and system for employing barcodes in a social network is disclosed. The method includes extracting location information from a scanned barcode, transmitting the location information to a social network server, and receiving location information of other users in a social network based on the transmitted location information.

## Description

### BACKGROUND OF THE INVENTION

### 1. Field of the Invention:

Aspects of the present invention relate to social networks. More particularly, the present invention relates to techniques for incorporating barcodes into social networks.

### 2. Description of the Related Art:

A social network is a social structure made up of individuals or organizations that are connected by one or more specific types of interdependency, such as friendship, kinship, beliefs, profession, alma mater, etc. Individuals are connected to other individuals (for example, friends) either directly or via other individuals. A social network service focuses on building online communities of people who share interests and/or activities, or who are interested in exploring the interests and activities of others. Most social network services are web based and provide a variety of ways for users to interact. A social networking web site is an example of web-based communities in Web 2.0. A Web 2.0 site allows its users to interact with other users or to change website content, in contrast to non-interactive websites where users are limited to the passive viewing of information that is provided to them.

Mobile social networking is social networking where one or more individuals of similar interests connect with one another using the mobile phone. Much like web based social networking, mobile social networking occurs in virtual communities. A current trend for Internet social networking websites such as Facebook and Twitter is to turn mobile.

Similarly, geosocial networking is social networking in which geographic services and capabilities are used to enable additional social dynamics. User-submitted location data or geolocation techniques can allow social networks to connect and coordinate users with local people or events that match their interests. For mobile social networks, location information can enable location-based services to enrich social networking. A mapping application is one example of geosocial network. Using GPS-equipped mobile devices, locations of a user's friends along with their presence status (available, away, etc) can be visually displayed on maps or on lists. Moreover, users can request alerts when friends are within a certain distance, send messages to groups of friends in particular area.

Another emerging trend in mobile services is barcodes, which are fast gaining traction as enablers for online content and services. Barcodes storing addresses and URLs may appear in magazines or on signs, buses, business cards, or just about any object about which users might need information. Users with a camera phone equipped with the correct reader software can scan the image of the bar code causing the phone's browser to launch and redirect to the programmed URL. This act of linking from physical world objects is known as a hardlink or physical world hyperlinks. Users can also generate and print their own barcodes for others to scan.

The types of barcodes in use today are one-dimensional (1D) barcodes or two-dimensional (2D) barcodes. 1D bar codes (also called linear bar codes) are one of the most widespread and well-known global identification applications and can be seen anywhere in the world. The standards for 1D barcodes have been developed and adopted since the early 1970's. 1D bar codes are read by laser-based scanners and camera-based readers. An example of a 1-D barcode is the Universal Product Code (UPC) found on most retail products where a Global Trade Identification Number (GTIN) is encoded in UPC symbology. The first and last digits are always placed outside the symbol to indicate Quiet Zones that are necessary for barcode scanners to work properly.

2D barcodes can contain more information than linear barcodes such as the UPC code. The conventional barcodes get wider as more data is encoded. As more data is encoded, the width of the conventional barcode becomes too cumbersome to read correctly. 2D barcodes make use of the vertical dimension to pack in more data in the same space. Several 2D bar codes symbologies have been standardized by the International Organization for Standardization (ISO) and the International Electrotechnical Commission (IEC). The ISO/IEC 18004 standard specifies a 2D bar code symbology referred to as Quick Response (QR) code. Each QR Code symbol is constructed of nominally square modules set out in a regular square array and consists of an encoding region and function patterns, namely finder, separator, timing patterns, and alignment patterns. Function patterns do not encode data. The symbol is surrounded on all four sides by a quiet zone border.

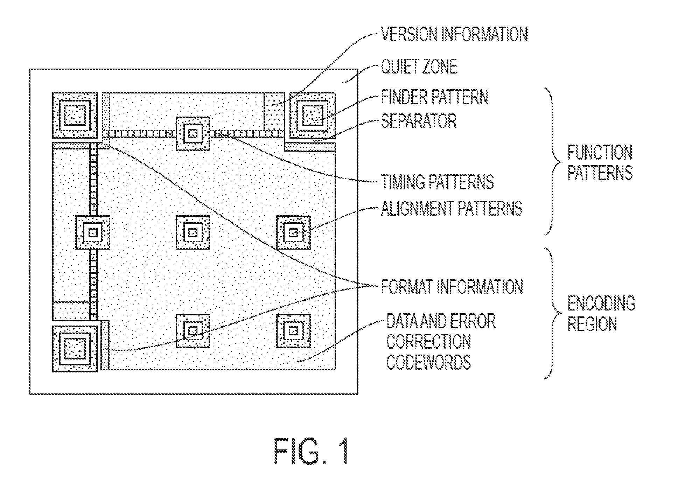

FIG. 1 illustrates a structure of a QR code 2005 symbol of the QR code according to the related art.

Referring to FIG. 1, the QR Code 2005 symbol has forty sizes, referred to as version 1, version 2, and so on to version 40. Version 1 measures 21 modules x 21 modules, version 2 measures 25 modules x 25 modules, and each successive version increases in steps of 4 modules per side, so that version 40 measures 177 modules x 177 modules. The data is encoded in 2x4 blocks with each block carrying 8-bits of data.

Other forms of 2D barcodes are also in use or being proposed. For example, a High Capacity Color Barcode (HCCB), also branded Microsoft Tag, is a type of barcode that uses colored triangles, instead of black-and-white lines or squares used by other barcode systems.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for integrating barcodes with geotagging and social networks.

In accordance with an aspect of the present invention, a method for mobile social networking is provided. The method includes extracting location information from a scanned barcode, transmitting the location information to a social network server, and receiving location information of other users in a social network based on the transmitted location information.

According to another aspect of the present invention, a mobile social networking method is provided. The method includes receiving, in a social network server, barcode information from a user of a social network, the barcode information decoded from a scanned barcode, and providing related information based on the barcode information to the user and/or other users in the social network.

According to another aspect of the present invention, a mobile device is provided. The mobile device includes a barcode scanning module for scanning a barcode, a barcode decoding module for decoding the barcode and for generating barcode information based on the decoded barcode, a communication module for transmitting the barcode information to a social network server and for receiving related information based on the barcode information from the social network server, and a processor for executing a social networking application, wherein the social networking application controls the communication module to transmit the barcode information and to receive the related information based on the barcode.

According to another aspect of the present invention, a social network server is provided. The social network server includes a network interface for communicating with users of a social network and for receiving barcode information from the users of the social network, a storage module, and a processor for executing a social network server application stored in the storage module, wherein, when the network interface receives barcode information from a user device of the social network, the social network server application controls the network interface to provide related information based on the barcode information to other users of the social network.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a structure of a QR code 2005 symbol according to the related art;
FIGs. 2A and 2B illustrate a location information update using 2D barcode in a social network according to an exemplary embodiment of the present invention;
FIG. 3 is a flowchart explaining location updates in a social network according to an exemplary embodiment of the present invention;
FIG. 4 illustrates a mobile device capable of scanning a 2D barcode and running a social network application according to an exemplary embodiment of the present invention;
FIG. 5 illustrates a social networking server according to an exemplary embodiment of the present invention;
FIG. 6 illustrates information posting in a social network according to an exemplary embodiment of the present invention; and
FIG. 7 illustrates product advertising according to an exemplary embodiment of the present invention;
Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

A bar-code based secure and reliable mobile social networking scheme where the location updates are initiated by a user when the user scans a 2D bar code, is described herein with respect to exemplary embodiments of the present invention. This is in contrast to GPS or cell-tower triangulation based geosocial networking methods, which continuously track a user's location and thus raise privacy and security concerns.

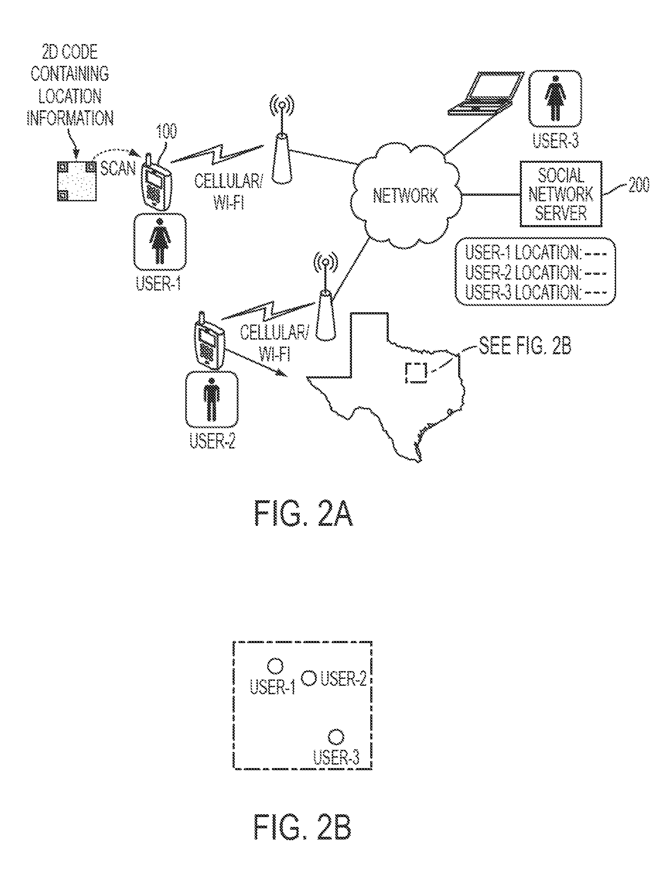

FIGs. 2A and 2B illustrate a location information update using a 2D bar code in a social network according to an exemplary embodiment of the present invention.

Referring to FIGs. 2A and 2B, user-1 scans a 2D bar code using a mobile device 100 equipped with a camera to obtain location information of the mobile device 100 (and, by extension, user-1). User-1 makes this information available to other users in the user's social network as shown in FIGs. 2A and 2B. In the example illustrated in FIGs. 2A and 2B, user-1 scans a 2D bar code containing location and other information about a physical structure, such as a mall or a sports stadium. The barcode could, for example, be located at or near an entrance to the physical structure (such as at a mall entrance or a ticket gate of the sports stadium). The location information can include location coordinates (latitude, longitude and altitude) as well as site name and other relevant information. The mobile device 100 then sends a location information update to a social network server 200 where user-1's location information is updated. This information is then available to other users that are part of user-1's social network, such as user-2 and user-3.

The social network server 200 can also keep track of location information of users within each social network and can send alerts when, for example, friends are within a certain distance of each other. For example, when user-1 scans a 2D code at the entrance to a mall or a sports stadium, the social network server 200 can send alerts to user-1 if some of user-1's friend are already in that mall or sports stadium. Similarly, the social network server 200 can also send alerts to user-1's friends who are already in the mall or sports stadium to alert the friends to user-1's arrival.

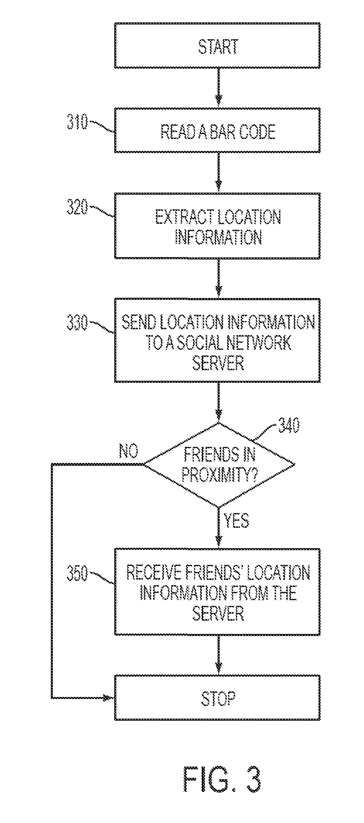

In another example, the location information update system can be used when a group of friends plans to meet at a particular location. For example, user-1, user-2, and user-3 may agree to meet at a bar on a given night. When user-1 arrives at the bar, user-1 scans a barcode having location information for the bar. The location information is transmitted to the social network server 200. The social network server 200 transmits an alert to user-2 and user-3 to inform them of user-1's arrival. User-2, who arrived earlier, now knows to look for user-1, while user-3, who is running late, now knows that user-1 has arrived. A flowchart explaining location updates in a mobile social networking application according to an exemplary embodiment of the present invention is given in FIG. 3.

FIG. 3 illustrates a flowchart explaining location updates in a social network according to an exemplary embodiment of the present invention.

Referring to FIG. 3, a user scans a barcode using a mobile device equipped with a camera or barcode scanner in step 310. In step 320, the mobile device extracts location information contained in the barcode, and transmits the location information to social network server 200 in step 330. The social network server 200 access location information for the user's friends and determines whether any of the user's friends are nearby in step 340. In step 350, the social network server 200 transmits the location information of the user to nearby friends.

The location information may be any information about a location. For example, the location information could include latitude and longitude information, a name, a street address, or the like. The social network may provide other users with additional information related to the location information in the barcode (i.e., related information). The related information may include other information about the location. For example, the related information could specify nearby subway or rail stations. Such information could be useful for friends who do not know where the identified location is. For example, when user-1 scans the barcode and the location information is transmitted to the user-2 and user-3, user-3 can use a street address included in the related information to find directions to user-1's location. This can be especially helpful if user-3 does not know how to get to user-1's location. If a user has requested to receive alerts when another user updates his or her location information, an option to access the related information could be provided to the user with the alert.

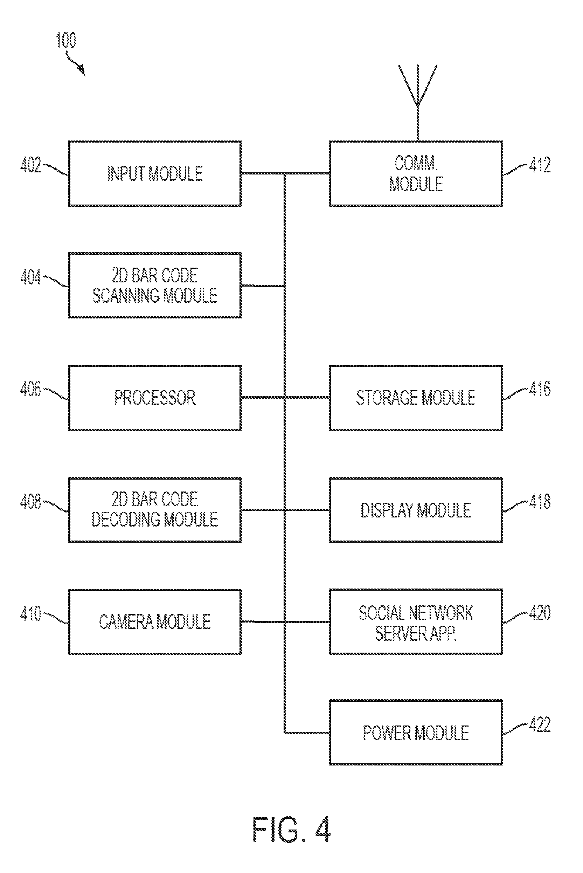

FIG. 4 illustrates the mobile device 100 capable of scanning a 2D barcode and running a social network application, according to an exemplary embodiment of the present invention.

Referring to FIG. 4, the mobile device 100 includes an input module 402, a 2D barcode scanning module 404, a processor 406, a 2D code decoding module 408, a camera module 410, a communication module 412, a storage module 416, a display module 418, social network application software 420, and a power module 420. According to an exemplary embodiment of the present invention, the mobile device 400 may include additional and/or different modules. Similarly, the functionality of one or more of the above modules may be integrated into a single component. The mobile device 400 can also implement one or more location based or navigation services requiring access to location information.

As used herein, the mobile device 100 is an example of a user device in the social network. The mobile device may be, for example, a mobile phone, smart phone, personal digital assistant, personal entertainment device, and the like. Other user devices may be, for example, desktop devices or other non-mobile devices.

The input module 402 and the display module 418 receive user input and display output to the user, respectively. The display module 418 may display a graphical user interface through which the user interacts with the mobile device 400. The display module 418 may be provided as a Liquid Crystal Display (LCD). In this case, the display module 418 may include a controller for controlling the LCD, a video memory in which image data is stored and an LCD element. If the LCD is provided as a touch screen, the display module 418 may perform a part or all of the functions of the input unit 402.

The 2D barcode scanning module 404 and the 2D barcode decoding module 408 scans and decodes a barcode. The information contained in the 2D barcode is transmitted to the social network server 200. The information may be location information as described above with respect to FIG. 3, or may be a Uniform Resource Locator (URL) or other information as described below. The camera module 410 may also perform some of the functions of the 2D barcode scanning module 404 and the 2D barcode scanning module 408. For example, the camera module 410 may capture an image of the 2D barcode. The 2D barcode can then be extracted from the image and processed by the 2D barcode scanning module 408.

According to an exemplary embodiment of the present invention, the mobile device 100 need not be equipped with both the 2D barcode scanning module and the camera module 410. Rather, the mobile device 100 may be equipped with only one of the 2D barcode scanning module 404 or the camera module 410. In addition, although described herein with respect to 2D barcodes, the 2D barcode scanning module 404 and 2D barcode decoding module 408 may also scan/decode other types of barcodes, such as 1D barcodes.

The communication module 412 communicates with external devices, and may be a wired and/or wireless connection. The communication module 412 may, for example, include a Radio Frequency (RF) transmitter and receiver for wireless communication. The communication module 412 may support communication via a variety of protocols, including Bluetooth, Wi-Fi, cellular service (including 3G and 4G services), Ethernet, Universal Serial Bus (USB), and the like. In particular, according to an exemplary embodiment of the present invention, the communication module 412 communicates with the social network server 200.

The storage module stores information in the mobile device 100. The storage module may store, for example, location information transmitted to the social network server 100, user information in the social network, user preference information, and the like. The social network application 420 may control the storage module 416 to store various information related to a social network.

The processor 406 controls overall operation of the mobile device 100. In particular, the processor 406 executes the social networking application 420, through which the user interacts with the social network and the social network server 200. The processor 406 may also execute other applications utilizing the scanned barcode information. Finally, the power module 422 supplies power to the mobile device 100. The power module may supply power via a battery (not illustrated) or a power adapter (not illustrated).

The social networking application 420 is a software program stored in the mobile phone 100 that controls the user's interaction with the social network server 200. According to some exemplary embodiments of the present invention, the social networking application may be a stand-alone application designed to operate with a particular social network service. According to other exemplary embodiments of the present invention, the social networking application may be a general-purpose application, such as a web browser, through which the user interacts with the social network service.

The social network application 420 may display a Graphical User Interface (GUI) through which the user interacts with the social network service and the social network server 200. The social network application 420 receives information decoded by the 2D barcode decoder 408 and transmits the information to the social network server 200 via the communication module 412. The transmission of the information to the social network server 200 may occur at the direction of the user via the GUI. For example, when the user scans a 2D barcode and the information contained in the barcode is decoded by the 2D barcode decoding module 408, the social networking application may display the information to the user via the GUI and provide options for the user to control the use of the information. The options could include storing the information in the storage module, providing the information to the social network server, requesting content related to the location information from the social network server 200, transmitting the location information to another user in the network (e.g., one or more users on the user's friend list), or the like.

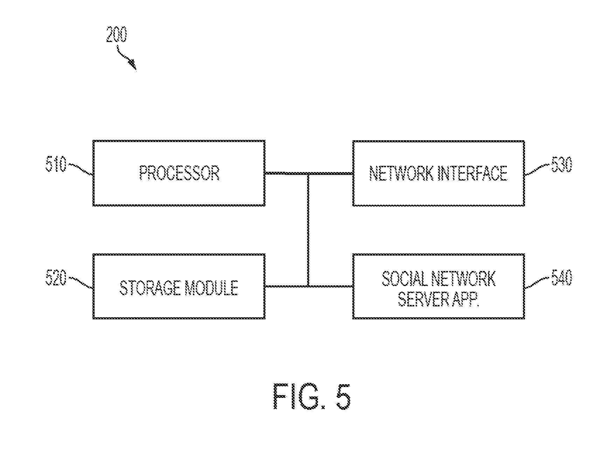

The social network application 420 may also receive information from the social network server 200. For example, the social network application 420 may receive targeted advertising from the social network server 200, content related to the information in the 2D barcode, or user recommendations/comments about a location identified in the information. The social network application 420 may also control the communication between the social network application 420 and the social network server 200 by way of user preferences, as discussed below. Once the user defines these preferences (via, for example, the GUI), the social network application 420 stores the preferences in the storage module 416 and controls the communication with the social network server 200 according to the information defined in the user preferences. An exemplary structure of the social network server 200 is described below with respect to FIG. 5.

FIG. 5 illustrates the social networking server 200 according to an exemplary embodiment of the present invention.

Referring to FIG. 5, the social networking server 200 includes a processor 510, a storage module 520, a network interface 530, and a social network server application 540. The processor 510 controls the overall operations of the social networking server 200, and in particular executes the social network server application 540. The network interface 530 communicates with the mobile device 100 and other user devices. These other devices may be mobile devices or desktop systems. The storage module 520 stores various information, which may include location information received from users, content received from users, user recommendations and preferences, and the like. The storage module may be provided externally.

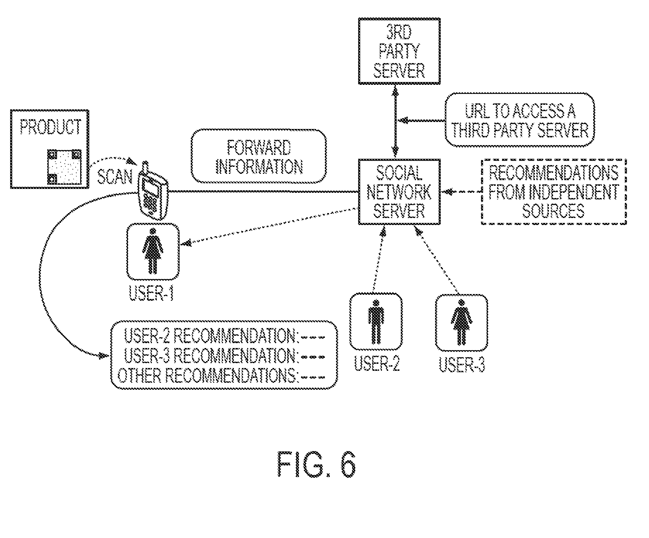

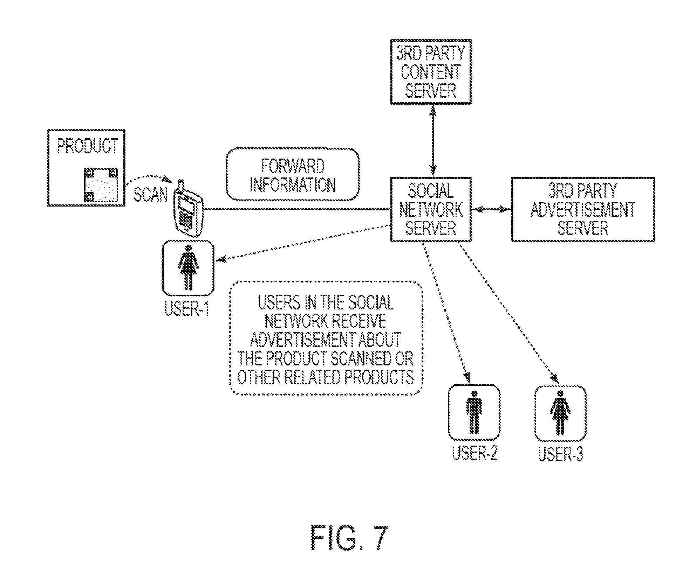

The social network server application 540, among others, is capable of interpreting and using location and other information derived from scanning 2D mobile codes to provide various services to the users of the social network. The social network server application 540 may implement features of the location information update service described above with respect to FIG. 3. For example, when a user transmits location information from the mobile device 100, the social network application software may control the social network server 200 to provide the location information to other users in the social network and/or update user location information stored in the storage module 520. The social network server application 540 may also provide location-based alerts to users in the social network. The social network server application 540 may also provide related information (as discussed above) to the other users of the social network. Additional examples of services provided by the social network server application 540 are described below with respect to FIGS. 6 and 7. Generally, when the social network server application 540 provides information, this can be understood as transmitting the information to user devices belonging to users of the social network, or storing the information in the storage module 520 for access by the users of the social network.

FIG. 6 illustrates information posting in a social network according to an exemplary embodiment of the present invention.

Referring to FIG. 6, when user-1 scans a 2D bar code on a product, the information in the bar code is decoded and forwarded to a social network server. The social network server then makes this information available to the users in the social network. This permits other users in the social network to provide their comments about the information contained in the bar code, such as product recommendations or reviews.

Such a scheme can provide additional benefits for the user. In one example, user-1 could be shopping for new furniture, and notices a particular sofa that she finds interesting. User-1 scans a barcode associated with the sofa. The social network application 420 transmits the information to the social network server 200, and the social network server application 540 transmits information about the sofa not only to the user-1 but also to other users in user-1's social network, including family and friends. The other users can then provide opinions and recommendations to user-1 based on this information.

According to an exemplary embodiment of the present invention, the information contained in the 2D barcode could be a URL. When user-1 scans a 2D bar code on a product, the mobile device 100 forwards the URL to the social network server 200. The social network server 200 then accesses the information specified by the URL (e.g., a web site) and finally posts this information for access by the users in the social network. The information about the product could include a picture and/or a video with product information or an advertisement. The barcode information may also be another type of link to information about a product or service (or, in some cases, a link to the product or service itself).

As described above, according to an exemplary embodiment of the present invention, after accessing the information about the product posted in response to scanning a 2D bar code by user-1, other users in the social network can provide their recommendations about the product. The social network application 420 and/or the social network server application 540 can also provide product recommendation information received from other independent sources. This information can then potentially be used by user-1 to make a buying decision.

Another example of a social network can be a user's healthcare network. In this case, user-1 may scan a food item or medicine with a 2D bar code on the package. The 2D barcode contains information about the food item or medicine. For example, in the case of medicine, the 2D barcode may contain some or all of the information contained in a "Drug Facts" label or a prescription insert. Alternatively, according to the example described above, the 2D barcode may contain a URL identifying a location where information about the food or medicine can be obtained. When this information is received by the social network server 200, the social network server 200 may respond with information or a recommendation based on health information contained in the social network. For example, user-1 may not be sure whether a particular over-the-counter medicine would have negative interactions with a prescription medication she is taking. User-1 scans a 2D barcode on the over-the-counter medicine, and the social network server application 540 operating on the mobile device 100 receives the information and transmits the information to the social network server 200. The social network server 200 access user-1's health information contained in the social network and responds with a recommendation as to whether the over-the-counter medicine is appropriate. The recommendation from the social network can be automatic based upon predefined rules without requiring any user intervention. Another example with respect to product advertisements is described below with respect to FIG. 7.

FIG. 7 illustrates product advertising according to an exemplary embodiment of the present invention.

Referring to FIG. 7, when a user in the social network scans a 2D bar code on a product, an advertisement about the product or other related products is sent to other users in the social network. This method provides an effective way of targeted advertisement because the network servers have knowledge about the product scanned. The advertisement can be provided by the social network server, a content server, or a 3^{rd} party advertisement server.

According to an exemplary embodiment of the present invention, the information forwarded to users in the social network may be filtered based on a predefined set of user preferences. Each user can set their preferences independently based on his or her interests and needs. For example, a user may only be interested in sale information for electronics goods, but not clothes. Similarly, a user may be interested in location information of friends while in a sports stadium and may not want to receive location updates of friends in a shopping mall. When the social network server 200 pushes information to the user's device, the social network server application 540 first determines whether this information falls in the user's area of interest. The user will be notified only if the information falls within the user's area of interest defined in the preferences. These preferences may be set by each user via the social network application 420 and may be stored in the storage module 520 of the social network server 200. In other cases, the message is simply ignored or perhaps logged for later retrieval.

According to an exemplary embodiment of the present invention, the recommendations from different users in the social network may be weighted or graded. For example, when user-1 scans a bar code on a product, user-1 receives recommendation from users in her social network and (possibly) from other sources. These recommendations are weighted before presentation to user-1. The weighting function can reside either in the social network server (i.e., the social network server application 540) or the user's device (i.e., the social network application 420). For example, over a period of time, a user can build a profile of friends whose recommendations are respected more than that of other users or other sources of recommendations. The weighting function can also combine recommendations from different users as well from other independent sources and present the result as a single recommendation to the user, such as "buy" or "don't buy". The social network application 420 or social network server application 540 may also combine a user's interest, such as "low", "medium" or "high", with the recommendation from the social network to come up with a final recommendation on making a buying decision.

Exemplary embodiments of the present invention are described where 2D bar codes displayed on a product or a place are scanned. However, exemplary embodiments of the present invention are equally applicable to 1D bar codes as well as other methods of physical representation of identification keys such as an Radio Frequency Identification (RFID) tag or an Near Field Communication (NFC) tag.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A mobile social networking method comprising:
extracting location information from a scanned barcode;
transmitting the location information to a social network server; and
receiving location information of other users in a social network based on the transmitted location information.

2. The mobile social networking method of claim 1, wherein the scanned barcode is a 2D barcode.

3. The mobile social networking method of claim 1, further comprising:
receiving an alert about other users in the social network based on location information provided by the other users to the social network server;
receiving, in a social network server, barcode information from a user of a social network, the barcode information decoded from a scanned barcode; and
providing related information based on the barcode information to the user and/or other users in the social network.

4. The mobile social network of claim 4, wherein the barcode information is location information, and providing the related information to the user and/or the other users based on preference information of each user and the providing of the related information comprises storing the location information and the related information in a storage unit of the social network server or updating previously stored location information in the storage unit with the location information.

5. The mobile social networking method of claim 4, wherein the method further comprises:
determining whether any of the other users are within a predetermined distance of the user based on the location information; and
providing an alert to the user identifying the other users within the predetermined distance of the user.

6. The mobile social networking method of claim 3, wherein the providing of the related information comprises:
providing advertisement information to the user and/or the other users in the social network, based on the received information; and
requesting the advertisement information from an advertisement server.

7. The mobile social networking method of claim 3, wherein the related information is a recommendation value, and the method further comprises:
determining a recommendation value corresponding to the barcode information based on other recommendation values corresponding to the barcode information provided by the other users in the social network; and
wherein the providing of the related information comprises providing the determined recommendation value to the user.

8. The mobile social networking method of claim 12, wherein the determining of the recommendation value comprises:
assigning a weight to each of the other recommendation values corresponding to the other users; and
determining the recommendation value based on the weighted recommendation values.

9. A mobile device comprising:
a barcode scanning module for scanning a barcode;
a barcode decoding module for decoding the barcode and for generating barcode information based on the decoded barcode;
a communication module for transmitting the barcode information to a social network server and for receiving related information based on the barcode information from the social network server; and
a processor for executing a social networking application;
wherein the social networking application controls the communication module to transmit the barcode information and to receive the related information based on the barcode.

10. The mobile device of claim 9, wherein the barcode information is a Uniform Resource Location (URL), and the social networking application controls the communication module to transmit the URL to the social network and to request the social network to provide information obtained from the URL to other users in the social network.

11. A social network server comprising:
a network interface for communicating with users of a social network and for receiving barcode information from the users of the social network;
a storage module; and
a processor for executing a social network server application stored in the storage module;
wherein, when the network interface receives barcode information from a user device of the social network, the social network server application controls the network interface to provide related information based on the barcode information to other users of the social network.

12. The social network server of claim 11, wherein the social network server application transmits the recommendations according to recommendation weights assigned to other users in the social network specified by a user of the user device.

13. The social network server of claim 11, wherein the social network server application obtains the advertisement from an advertisement server.

14. The social network server of claim 11, wherein the social network server application stores, for each user of the social network, a list of the other users to which the related information is to be provided and the related information in the storage module so as to provide the related information to the other users of the social network.

15. The social network server of claim 11, wherein the social network server application controls the network interface to transmit the related information to a plurality of devices, each device corresponding to one of the other users of the social network, so as to provide the related information to the other users of the social network.
